# FASCICULE DE BREVET EUROPEEN

(11) **EP 2 218 322 B1**
(45) Date de publication et mention de la délivrance du brevet: **23.11.2011**
(21) Numéro de dépôt: 10305142.1
(22) Date de dépôt: 11.02.2010
(51) Int. Cl.: A01F 29/00

(54) **Rotor de démêlage de produits en brins conditionnés sous forme compactée et machine agricole comprenant un tel rotor**
Rotor zur Lockerung von in einer kompakten Form konditioniertem Halmmaterial und Landwirtschaftsmaschine mit einem solchen Rotor
Rotor for loosening fibre products in a compact form and agricultural machine comprising such a rotor

(30) Priorité: 11.02.2009 FR 0950864
(43) Date de publication de la demande: 18.08.2010
(73) Titulaire: Jeantil, 35590 L'Hermitage (FR)
(72) Inventeur: Jeantil, Philippe, 35132, VEZIN LE COQUET (FR)
(74) Mandataire: Domenego, Bertrand

(56) Documents cités:
- EP-A- 1 532 860
- DE-U1- 29 609 094
- FR-A- 2 727 279
- FR-A- 2 851 416

## Description

La présente invention concerne un rotor de démêlage de produits en brins conditionnés sous forme compactée, du type comprenant un tambour cylindrique, et, sur la périphérie du tambour, des organes de découpage circulaires répartis le long du tambour pour le découpage des produits et des aubes d'entraînement des produits découpés disposées entre les organes de découpage.

Un tel rotor de démêlage, connu par exemple de FR 2 727 279, est destiné à être utilisé dans un démêleur d'une machine agricole telle qu'une désileuse, une pailleuse, une mélangeuse ou analogue...

Une telle machine comprend généralement une caisse de réception de produits conditionnés en ensilage, balle ronde, balle rectangulaire ou analogue, un démêleur à rotor de démêlage pour démêler les produits, un convoyeur disposé en amont du démêleur pour acheminer les produits reçus dans la caisse sur le démêleur, et un éjecteur disposé en aval du démêleur pour éjecter les produits démêlés.

Le diamètre du tambour et la hauteur radiale des organes de démêlage (organes de découpage circulaires et aubes de propulsion) du rotor de démêlage sont choisis en fonction du produit à démêler.

Un rotor de démêlage ayant un tambour de petit diamètre et des organes de démêlage de hauteur radiale réduite convient pour le démêlage de produits à brins courts, de longueur typiquement inférieure à 0.30 m Néanmoins, un tel démêleur ne permet pas le démêlage de produits à brins longs du fait de l'enroulement du produit autour du démêleur.

Un rotor de démêlage ayant un tambour de grand diamètre et des organes de démêlage de hauteur radiale réduite convient pour le démêlage de produits à brins longs, de longueur typiquement comprise entre 0.30 m et 1.20 m. Cette configuration évite l'enroulement des produits sur le rotor et permet l'obtention d'un débit satisfaisant pour un produit à brins longs. Néanmoins, un tel démêleur n'assure pas un débit satisfaisant pour le démêlage d'un produit à brins courts.

Un rotor de démêlage ayant un tambour de petit diamètre et des organes de démêlage de grande hauteur radiale évite l'enroulement des produits à brins longs, et permet d'obtenir un débit satisfaisant en brins longs. Néanmoins, le débit en brins courts et en brins moyens et secs est trop élevé.

Un but de l'invention est de fournir un rotor de démêlage polyvalent, permettant le démêlage de produit de brins de différentes longueurs avec un débit satisfaisant.

A cet effet, l'invention propose un rotor de démêlage du type précité, comprenant, en outre, sur la périphérie du tambour, des aubes auxiliaires disposées entre les aubes d'entraînement et présentant une hauteur radiale inférieure à celle des aubes d'entraînement.

Selon d'autres mode de réalisation, le rotor de démêlage comprend une ou plusieurs de caractéristiques suivantes, prises isolément ou selon toutes les combinaisons techniquement possibles :
- chaque aube d'entraînement est inclinée par rapport à un plan perpendiculaire à l'axe du tambour ;
- chaque aube d'entraînement s'étend sensiblement en hélice autour de l'axe du tambour ;
- les aubes d'entraînement sont dentées et la hauteur radiale des aubes auxiliaires est égale ou inférieure à la hauteur radiale des aubes d'entraînement jusqu'à la base des dents des aubes d'entraînement ;
- chaque aube auxiliaire s'étend sensiblement parallèlement à l'axe du tambour ;
- chaque aube auxiliaire s'élargit progressivement depuis son bord supérieur vers sa base ;
- chaque aube auxiliaire possède deux faces inclinées par rapport à un plan passant par son bord supérieur et par l'axe du tambour ;
- les aubes auxiliaires sont montées amovibles sur le rotor ; et
- les aubes auxiliaires sont vissées sur les organes de découpage.

L'invention concerne également une machine agricole comprenant une caisse de réception du produit, un démêleur pour démêler les produits, et un convoyeur pour amener le produit vers le démêleur, le démêleur comprenant au moins un rotor de démêlage tel que défini ci-dessus.

Selon d'autres mode de réalisation, la machine agricole comprend une ou plusieurs de caractéristiques suivantes, prises isolément ou selon toutes les combinaisons techniquement possibles :
- elle comprend des doigts disposés en travers d'une section de sortie du démêleur délimitée par le rotor, en regard des intervalles délimités entre les organes de découpage circulaires et munis d'aubes d'entraînement ;
- les doigts sont disposés de façon à passer entre des dents des aubes d'entraînement ;
- le démêleur comprend au moins deux rotors parallèles dont au moins un rotor tel que défini ci-dessus ; et
- elle comprend un premier rotor comprenant des organes de découpage circulaires doubles, et un deuxième rotor, adjacent au premier rotor, comprenant des organes de découpage circulaires simples disposés chacun en regard d'un organe de découpage circulaire double du premier rotor.

L'invention et ses avantages seront mieux compris à la lecture de la description qui va suivre, donnée uniquement à titre d'exemple et faite en se référant aux dessins annexés, sur lesquels :
- la figure 1 est une vue schématique latérale d'une désileuse munie d'un démêleur comprenant un rotor de démêlage;
- la figure 2 est une vue en perspective du rotor de démêlage de la figure 1 ;
- la figure 3 est une vue de face du démêleur de la figure 1 ; et
- la figure 4 est une vue analogue à celle de la figure 3 d'un démêleur selon une variante à plusieurs rotors.

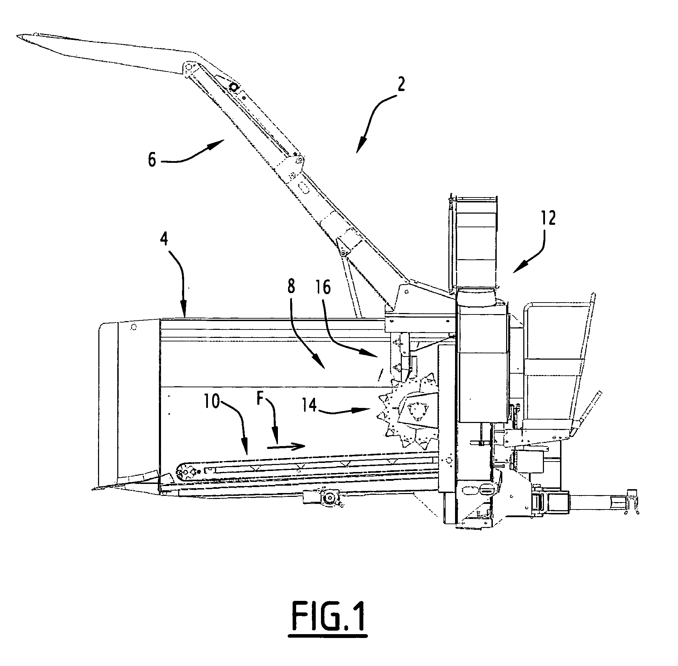

Telle que représentée sur la figure 1, la désileuse 2 comprend une caisse 4 de réception de produits conditionnés sous forme d'ensilages, de balles rondes, de balles rectangulaires ou analogues, et une porte ou griffe 6 de préhension et de chargement des produits dans la caisse 4.

La désileuse 2 comprend un démêleur 8 pour démêler les produits reçus dans la caisse 4, un fond mouvant ou convoyeur 10 disposé au fond de la caisse 4 pour acheminer les produits reçus dans la caisse 4 vers le démêleur 8 (Flèche F), et un éjecteur 12 pour éjecter les produits démêler par le démêleur 8. Le convoyeur 10 est disposé en amont du démêleur 8, et l'éjecteur 12 est disposé en aval du démêleur 8.

Le convoyeur 10 comprend par exemple, de manière connue, des barres transversales reliées par des chaînes. En fonctionnement, les barres se déplacent sur le fond de la caisse 4 en direction de démêleur 8 pour acheminer le produit vers celui-ci.

L'éjecteur 12 comprend par exemple, de manière connue, une roue à aubes disposée dans une volute et des moyens d'entraînement en rotation de la roue à aubes. En fonctionnement, la roue à aube reçoit les produits démêlés axialement et les propulsent radialement vers l'extérieur dans la volute, d'où ils sortent par exemple par une buse de sortie ou sur un tapis de distribution latérale droit ou gauche placé à l'avant de la caisse.

Le démêleur 8 comprend un rotor de démêlage 14 et une herse 16 de contrôle du découpage et de régulation du débit.

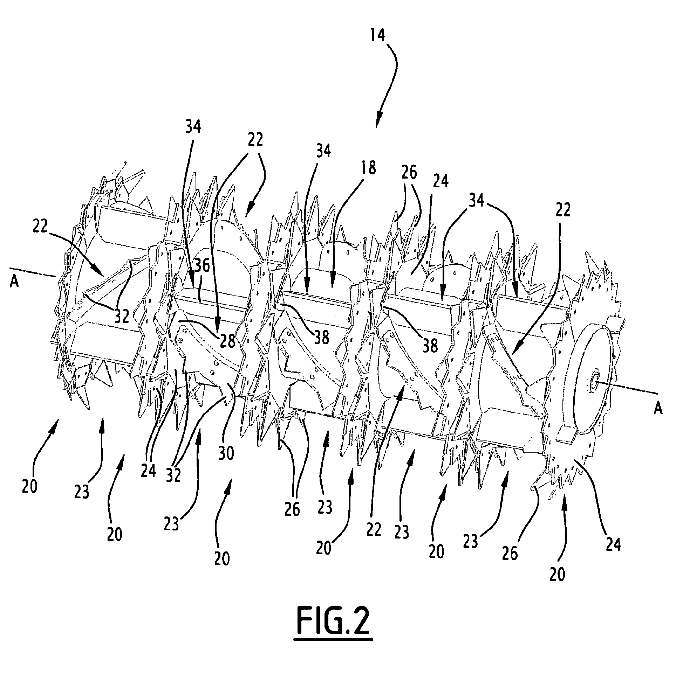

Tel qu'illustré sur la figure 2, le rotor 14 présente un axe A et comprend un tambour 18 cylindrique s'étendant suivant l'axe A du rotor 14 et des organes de démêlage disposés sur la périphérique du tambour 18.

Les organes de démêlage comprennent des organes de découpage 20 circulaires répartis le long du tambour 18 pour découper les produits acheminés vers le rotor 14 et des aubes d'entraînement 22 pour entraîner les produits découpés, disposées entre les organes de découpage 20.

Chaque organe de découpage 20 comprend au moins un disque 24 disposé sur la périphérie du tambour 18 et des sections 26 tranchantes fixées sur le bord extérieur du disque 24. Chaque disque 24 s'étend dans un plan perpendiculaire à l'axe A du rotor 14. Tel qu'illustrés les disques 24 ont des bords extérieurs crénelés.

Les organes de découpage 20 disposés aux extrémités axiale du tambour sont « simples » : ils comprenant chacun un seul disque 24. Les sections 26 de ces organes de découpage 20 d'extrémité sont inclinées vers l'intérieur pour acheminer les produits découpés vers le milieu du tambour 18.

Les autres organes de découpage 20 intermédiaires, répartis entre les organes de découpage 20 d'extrémité, sont des organes de découpage « double » : il comprennent chacun deux disques 24 espacés d'un jeu axial faible, et reliés par des entretoises axiales.

Les organes de découpage 20 double permettent une découpe améliorée. En variante, tous les organes de découpage sont simples ou doubles.

Des aubes d'entraînement 22 sont disposées dans l'intervalle 23 axial délimité entre chaque paire d'organes de découpage 20 adjacents. Plusieurs aubes d'entraînement 22 sont réparties régulièrement sur la circonférence du tambour 18 dans chaque intervalle. Dans l'exemple de la Figure 2, trois aubes d'entraînement 22 sont réparties à 120° entre chaque paire d'organes de découpage 20.

Chaque aube d'entraînement 22 est inclinée par rapport à un plan perpendiculaire à l'axe A du rotor 18. Chaque aube d'entraînement 22 s'étend par exemple en hélice autour de l'axe A du rotor 14.

Les aubes d'entraînement 22 sont dentées. Dans le mode de réalisation de la figure 2, chaque aube d'entraînement 22 comprend une embase 28 fixée rigidement sur le tambour 18, par exemple par soudage, et une denture 30 fixée de manière amovible sur l'embase 28, par exemple par vissage. Chaque denture 30 comprend deux dents 32 espacées.

Le rotor 14 comprend en outre des aubes auxiliaires 34 disposées sur la périphérie du tambour 18 en étant intercalées, dans chaque intervalle 23 avec les aubes d'entraînement 22. Ainsi, dans chaque intervalle 23, les aubes d'entraînement 22 sont alternées circonférentiellement avec des aubes auxiliaires 34. Dans l'exemple de la Figure 2, trois aubes auxiliaires 34 sont intercalées entre les trois aubes d'entraînement 22 dans chaque intervalle 23.

Les aubes auxiliaires 34 possèdent une hauteur radiale égale ou inférieure à celle des aubes d'entraînement 22. En d'autres termes, l'enveloppe cylindrique externe des aubes auxiliaires 34 possède un diamètre égal ou inférieur à celui de l'enveloppe cylindrique externe des aubes d'entraînement 22. De préférence, les aubes auxiliaires 34 possède une hauteur radiale égale ou inférieure à celle des aubes d'entraînement prise à la base des dents 32 des aubes d'entraînement 22.

Chaque aube auxiliaire 34 divise l'espace délimité entre deux organes de découpage 20 adjacents et deux aubes d'entraînement 22 en deux cavités de volume inférieur.

Dans le mode de réalisation de la Figure 2, chaque aube auxiliaire 34 s'étend transversalement entre les organes de découpage 20 d'une paire parallèlement à l'axe A du rotor 14. Les cavités sont de forme générale triangulaire. Cette disposition permet un fonctionnement satisfaisant. En variante les aubes auxiliaire 34 sont inclinées par rapport à l'axe du tambour 18, et s'étendent par exemple en hélice.

Les aubes auxiliaires 34 possèdent un bord supérieur 36 lisse. Chaque aube auxiliaire 34 s'élargit progressivement depuis sont bord supérieur 36 vers sa base, radialement vers l'intérieur en direction de l'axe A du rotor 14. Chaque aube auxiliaire 34 possède deux faces inclinées par rapport à un plan passant par son bord supérieur 36 et l'axe A du tambour 18. Chaque aube 34 se présente par exemple sous la forme d'un profilé à section en « V » tourné vers l'axe A du tambour 18 de façon que sa pointe soit dirigée radialement vers l'extérieur et forme le bord supérieur 36.

Les aubes auxiliaires 34 sont fixées de manière amovible, par exemple par vissage sur les disques 24 des organes de découpage 20. A cet effet, chaque aube auxiliaire 34 comprend à ses extrémités des plaques de fixations 38 prévues pour être vissées au moyen des vis de fixation des sections 26 sur les disques 24.

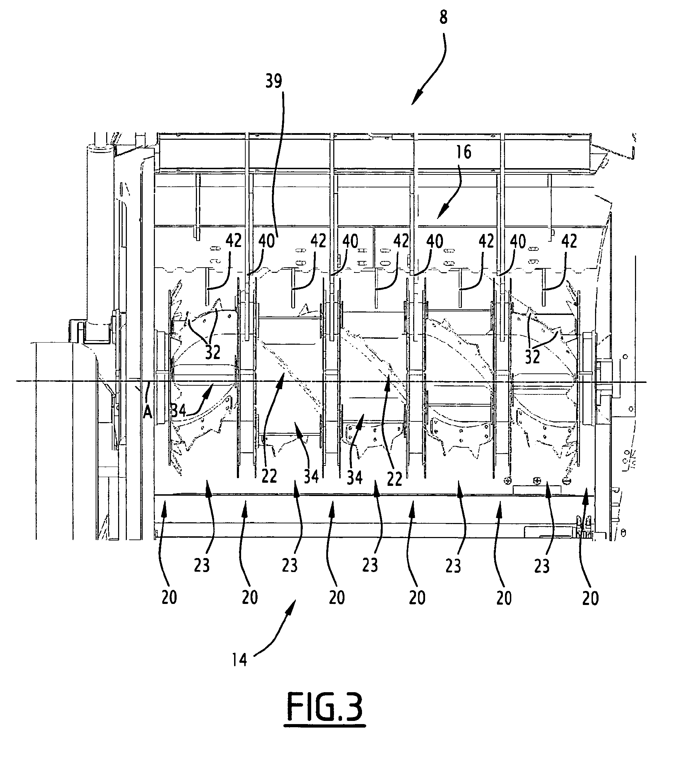

Tel qu'illustré sur la figure 3, la herse 16 du démêleur 8 est disposée au-dessus du rotor 14 en travers d'une section de sortie du démêleur 8, délimitée entre le rotor 14 et une traverse 39 s'étendant parallèlement au rotor 14.

La herse 16 comprend des premiers doigts 40 s'étendant en travers de la section de sortie en étant décalé vers l'amont, et situés en regard des organes de découpage 20 doubles, plus précisément avec le jeu axial entre les disques 24 de ces organes de découpage 20. Les premiers doigts 40 permettent de retenir le produit pour ajuster la profondeur pénétration des organes de découpage 20 dans les produits.

La herse 16 comprend des deuxièmes doigts 42 disposés en aval des premiers doigts 40 dans le sens de rotation du rotor 14, et s'étendant en regard des intervalles 23. Chaque deuxième doigt 42 est disposé de façon à passer entre les dents 32 des aubes d'entraînement 22 de l'unité de démêlage correspondante.

En fonctionnement, le rotor 14 est entraîné en rotation autour de l'axe du tambour 18 à grande vitesse (typiquement entre 400 et 500 tr/min) et des produits en brins conditionnés sous forme compactée, tel que ensilage, balle ronde, balle rectangulaire ou analogue, sont acheminés vers le démêleur 8.

Les organes de découpage 20 découpent les produits qui sont entraînés par les aubes d'entraînement 22 dans les cavités définies sur le rotor 14 entre, les organes de découpage 20, les aubes d'entraînement 2 et les aubes auxiliaires 34. Le débit des produits dépend du volume de ces cavités. Ce volume dépend du diamètre du tambour 18 et de la hauteur radiale des organes de découpage 20 et des aubes d'entraînement 22.

Les aubes auxiliaires 34 ne participent pas à décrocher les produits découpés mais définissent des cavités de volume réduit par rapport aux espaces qui seraient délimités enter les organes de découpages et les aubes d'entraînement 22. Les aubes auxiliaires 34 permettent donc de limiter le débit des produits, en particulier celui des produits à brins courts et à brins moyens. La forme des aubes auxiliaires 34 permet de limiter encore le débit de ce type de produits.

Il est dont possible d'obtenir un rotor 14 polyvalent permettant le démêlage de produits à brins courts ou long en prévoyant un tambour de petit diamètre et des organes de démêlage de grande hauteur radiale. Un tel rotor 14 évite l'enroulement des produits à brins longs et permet d'obtenir un débit satisfaisant en brins longs du fait du dimensionnement du tambour et des organes de démêlage, et permet de limiter le débit en produits à brins courts ou moyens du fait de la présence des aubes auxiliaires 34.

Le montage amovible des aubes auxiliaires 34 permet de les retirer, par exemple pour le démêlage de produits à brins longs.

Les aubes d'entraînement 22 munies de dentures 30 amovibles permettent de remplacer facilement les dentures et/ou de régler la hauteur des aubes d'entraînement 22.

Les deuxièmes doigts 42 permettent un contrôle supplémentaire du débit des produits démêlés.

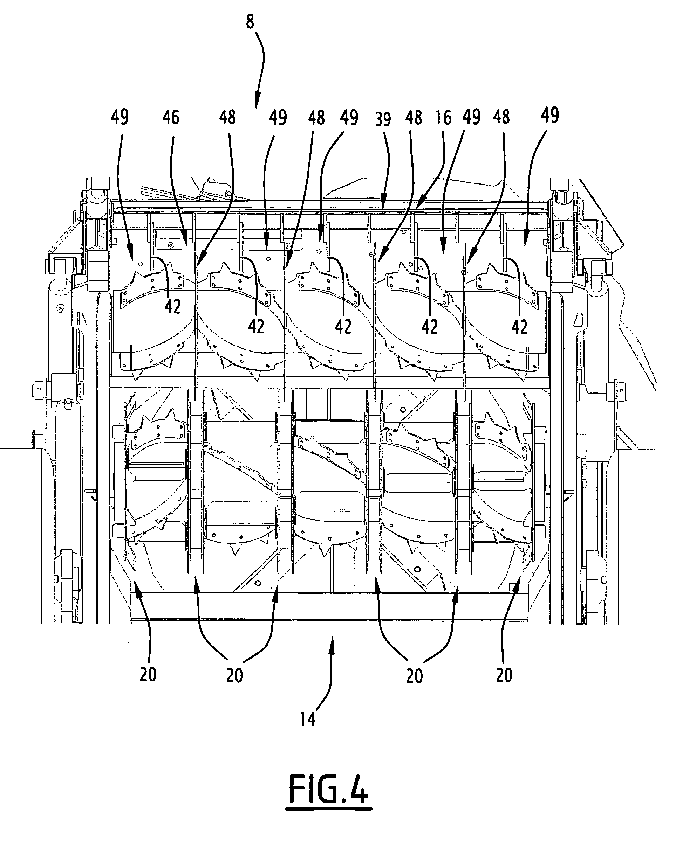

Le démêleur 8 de la Figure 4 diffère de celui de la Figure 3 en ce qu'il comprend un deuxième rotor 46 de démêlage disposé à rotation parallèlement au premier rotor 14, au-dessus de ce dernier.

Le deuxième rotor 46 est analogue au premier rotor 14, et diffère de celui-ci en ce qu'il comprend des organes de découpage 48 simples, et en ce qu'il est dépourvu d'aubes auxiliaires.

Les organes de découpage 48 intermédiaires du deuxième rotor 46 sont disposés en regard des jeux axiaux des organes de découpage 20 doubles du premier rotor.

Les rotors 14, 46 sont espacés de façon que les sections tranchantes des organes de découpage 48 intermédiaires simples du deuxième rotor 46 passent entre celles des organes de découpage 20 intermédiaires doubles du premier rotor 14.

Le démêleur 8 est dépourvu de herse entre les deux rotors 14, 46. Il comprend une herse 16 en travers d'une section de sortie délimitée entre le deuxième rotor 46 et une traverse 39 s'étendant au-dessus de celui-ci. Cette herse 16 comprend des doigts 42 en regard les intervalles 49 définis entre les organes de découpage 48 du deuxième rotor 46, et est dépourvu de doigts en regard des organes de découpage 48.

L'invention s'applique aux désileuses, et de manière plus générale à tous types de machines agricoles, automotrice ou non, comprenant un démêleur pour le démêlage de produits en brins (herbe, paille, fourrage...) conditionnés sous forme compactée (ensilage, balles, botte ou analogues) telle qu'une pailleuse, une desileuse, une mélangeuse ou analogue...

## Revendications

1. Rotor de démêlage de produits en brins conditionnés sous forme compactée, du type comprenant un tambour (18) cylindrique, et, sur la périphérie du tambour (18), des organes de découpage (20) circulaires répartis le long du tambour (18) pour le découpage des produits et des aubes d'entraînement (22) des produits découpés disposées entre les organes de découpage (20), **caractérisé en ce qu'**il comprend en outre, sur la périphérie du tambour (18), des aubes auxiliaires (34) disposées entre les aubes d'entraînement (22) et présentant une hauteur radiale inférieure à celle des aubes d'entraînement (22).

2. Rotor selon la revendication 1, dans lequel chaque aube d'entraînement (22) est inclinée par rapport à un plan perpendiculaire à l'axe du tambour (18).

3. Rotor selon la revendication 1 ou 2, dans lequel chaque aube d'entraînement (22) s'étend sensiblement en hélice autour de l'axe du tambour (18).

4. Rotor selon l'une quelconque des revendications précédentes, dans lequel les aubes d'entraînement (22) sont dentées et la hauteur radiale des aubes auxiliaires (34) est égale ou inférieure à la hauteur radiale des aubes d'entraînement (22) jusqu'à la base des dents des aubes d'entraînement (22).

5. Rotor selon l'une quelconque des revendication précédentes, dans lequel chaque aube auxiliaire s'étend sensiblement parallèlement à l'axe du tambour (18).

6. Rotor selon l'une quelconque des revendications précédentes, dans lequel chaque aube auxiliaire (34) s'élargit progressivement depuis son bords supérieur vers sa base.

7. Rotor selon l'une quelconque des revendications précédentes, dans lequel chaque aube auxiliaire (34) possède deux face inclinées par rapport à un plan passant par son bord supérieur et par l'axe du tambour (18).

8. Rotor selon l'une quelconque des revendications précédentes, dans lequel les aubes auxiliaires (34) sont montées amovibles sur le rotor (14).

9. Rotor selon l'une quelconque des revendications précédentes, dans lequel les aubes auxiliaires (34) sont vissées sur les organes de découpage (22).

10. Machine agricole comprenant une caisse de réception du produit, un démêleur pour démêler les produits, et un convoyeur pour amener le produit vers le démêleur, **caractérisé en ce que** le démêleur comprend au moins un rotor de démêlage selon l'une quelconque des revendications précédentes.

11. Machine agricole selon la revendication 10, comprenant des doigts (42) disposés en travers d'une section de sortie du démêleur délimitée par le rotor (14), en regard des intervalles délimités entre les organes de découpage circulaires et munis d'aubes d'entraînement.

12. Machine agricole selon la revendication 11, dans laquelle les doigts (42) sont disposés de façon à passer entre des dents des aubes d'entraînement (22).

13. Machine agricole selon l'une quelconque des revendications 10 à 12, dans laquelle le démêleur comprend au moins deux rotors parallèles dont au moins un rotor selon l'une quelconque des revendications 1 à 9.

14. Machine agricole selon la revendication 13, dans lequel un premier rotor comprend des organes de découpage circulaires doubles, et un deuxième rotor, adjacent au premier rotor, comprend des organe de découpage circulaires simples disposés chacun en regard d'un organe de découpage circulaire double du premier rotor.

## Claims

1. A rotor for disentangling strand products in compact form of the type comprising a cylindrical drum (18) and, on the periphery of the drum (18), circular cutting parts (20) distributed along the drum (18) for cutting products and manoeuvring vanes (22) of the cut products arranged between the cutting parts (20), **characterised in that** it further comprises, on the periphery of the drum (18), auxiliary vanes (34) arranged between the manoeuvring vanes (22) and having a radial height less than that of the manoeuvring vanes (22).

2. The rotor according to Claim 1, wherein each manoeuvring vane (22) is inclined with respect to a plane perpendicular to the axis of the drum (18).

3. The rotor according to Claim 1 or 2, wherein each manoeuvring vane (22) extends substantially helically around the axis of the drum (18).

4. The rotor according to any of the preceding claims, wherein manoeuvring vanes (22) are toothed and the radial height of the auxiliary vanes (34) is equal to or less than that of the radial height of the manoeuvring vanes (22) to the base of the teeth of the manoeuvring vanes (22),

5. The rotor according to any of the preceding claims, wherein each auxiliary vane extends substantially parallel to the axis of the drum (18).

6. The rotor according to any of the preceding claims, wherein each auxiliary vane (34) widens progressively from its upper edge to its base

7. The rotor according to any of the preceding claims, wherein each auxiliary vane (34) has two faces which are inclined with respect to a plane passing via its upper edge and via the axis of the drum (18),

8. The rotor according to any of the preceding claims, wherein the auxiliary vanes (34) are mounted detachably on the rotor (14).

9. The rotor according to any of the preceding claims, wherein the auxiliary vanes (34) are screwed onto the cutting parts (20).

10. An agricultural machine comprising a box for holding the product, a disentangler for disentangling the products, and a conveyer for taking the product to the disentangler, **characterised in that** the disentangler comprises at least one disentangling rotor according to any of the preceding claims.

11. The agricultural machine according to Claim 10, comprising fingers (42) arranged across an outlet section of the disentangler defined by the rotor (14) opposite defined intervals between the circular cutting parts and provided with manoeuvring vanes.

12. The agricultural machine according to Claim 11, wherein the fingers (42) are arranged such as to pass between the teeth of the manoeuvring vanes (22).

13. The agricultural machine according to any of Claims 10 to 12, wherein the disentangler comprises at least two parallel rotors at least one of which is a rotor according to any of Claims 1 to 9.

14. The agricultural machine according to Claims 13, wherein a first rotor comprises double circular cutting parts, and a second rotor, adjacent to the first rotor, comprises single circular cutting parts, each placed opposite a double circular cutting part of the first rotor.

## Patentansprüche

1. Rotor zum Trennen von in komprimierter Form konditionierten Faserprodukten, des Typs, der ausweist: eine zylinderförmige Trommel (18) und kreisförmige Schneidemittel (20) am Umfang der Trommel (18), die entlang der Trommel (18) verteilt sind, zum Schneiden der Produkte, und Antriebsschaufeln (22) für die geschnittenen Produkte, die zwischen den Schneidemitteln (20) angeordnet sind, **dadurch gekennzeichnet, dass** er ferner am Umfang der Trommel (18) Hilfsschaufeln (34) aufweist, die zwischen den Antriebsschaufeln (22) angeordnet sind und eine radial Höhe haben, die kleiner als die der Antriebsschaufeln (22) ist.

2. Rotor gemäß Anspruch 1, wobei jede Antriebsschaufel (22) bezüglich einher zu der Achse der Trommel (18) senkrechten Ebene geneigt ist.

3. Rotor gemäß Anspruch 1 oder 2, wobei jede Antriebsschaufel (22) sich im Wesentlichen schraubenlinienförmig um die Achse der Trommel (18) herum erstreckt.

4. Rotor gemäß irgendeinem der vorhergehenden Ansprüche, wobei die Antriebsschaufeln (22) gezahnt sind und die radiale Höhe der Hilfsschaufeln (34) kleiner oder gleich der radialen Höhe der Antriebsschaufeln (22) bis zu der Basis der Zähne der Antriebsschaufeln (22) ist.

5. Rotor gemäß irgendeinem der vorhergehenden Ansprüche, wobei jede Hilfsschaufel sich im Wesentlichen parallel zu der Achse der Trommel (18) erstreckt.

6. Rotor gemäß irgendeinem der vorhergehenden Ansprüche, wobei jede Hilfsschaufel (34) sich von ihrem oberen Rand in Richtung zu ihrer Basis schrittweise verbreitert.

7. Rotor gemäß irgendeinem der vorhergehenden Ansprüche, wobei jede Hilfsschaufel (34) zwei Seiten aufweist, die bezüglich, einer Ebene geneigt sind, die durch ihren oberen Rand und durch die Achse der Trommel (18) verläuft.

8. Rotor gemäß irgendeinem der vorhergehenden Ansprüche, wobei die Hilfsschaufeln (34) lösbar an dem Rotor (14) montiert sind.

9. Rotor gemäß irgendeinem der vorhergehenden Ansprüche, wobei die Hilfsschaufeln (34) an die Schneidemittel (22) geschraubt sind.

10. Landmaschine, aufweisend einen Behälter zum Aufnehmen des Produktes, eine Trennvorrichtung zum Trennen der Produkte, und eine Fördereinrichtung zum Zuführen des Produktes in Richtung zu der Trennvorrichtung, **dadurch gekennzeichnet, dass** die Trennvorrichtung mindestens eignen Rotor zum Trennen gemäß irgendeinem der vorhergehenden Ansprüche aufweiset.

11. Landmaschine gemäß Anspruch 10, aufweisend Finger (42), die quer durch einen durch den Rotor (14) begrenzten Ausgangsabschnitt der Trennvorrichtung angeordnet sind, gegenüber den Zwischenräumen, die zwischen den kreisförmigen Schneidemitteln begrenzt und mit Antriebsschaufeln versehen sind.

12. Landmaschine gemäß Anspruch 11, wobei die Finger (42) angeordnet sind, um zwischen Zähnen der Antriebsschaufeln (22) zu verlaufen.

13. Landmaschine gemäß irgendeinem der Anspruche 10 bis 12, wobei die Trennvorrichtung mindestens zwei parallele Rotoren aufweiset, von denen mindestens einer ein Rotor gemäß irgendeinem der Ansprüche 1 bis 9 ist.

14. Landmaschine gemäß Anspruch 13, wobei ein erster Rotor doppelte kreisförmige Schneidemittel aufweist und ein zweiter Rotor benachbart zu dem ersten Rotor einfache kreisförmige Schneidemittel aufweist, die jeweils gegenüber einem doppelten kreisförmigen Schneidemittel des ersten Rotors angeordnet sind.
